# EUROPÄISCHE PATENTSCHRIFT

(11) **EP 0 483 650 B1**
(45) Veröffentlichungstag und Bekanntmachung des Hinweises auf die Patenterteilung: **23.08.1995**
(21) Anmeldenummer: 91118022.2
(22) Anmeldetag: 23.10.1991
(51) Int. Cl.: B60D 1/62, B60R 16/02, B60Q 1/30

(54) **Schaltungsanordung für ein Zugfahrzeug**
Circuit arrangement for a towing vehicle
Aménagement de circuit pour un véhicule tracteur

(30) Priorität: 27.10.1990 DE 4034199; 05.02.1991 DE 4103400
(43) Veröffentlichungstag der Anmeldung: 06.05.1992
(73) Patentinhaber: Gebhard, Dietrich, D-76316 Malsch (DE)
(72) Erfinder: Gebhard, Dietrich, D-76316 Malsch (DE)
(74) Vertreter: Witte, Alexander, Dr.-Ing.

(56) Entgegenhaltungen:
- DE-A- 3 724 916
- GB-B- 1 464 303
- US-A- 3 497 707

## Beschreibung

Die Erfindung betrifft eine Schaltungsanordnung für ein Zugfahrzeug eines aus dem Zugfahrzeug und einem Hänger bestehenden Wagenzuges, wobei das Zugfahrzeug eine Betriebsspannung zum Betreiben seiner Beleuchtungs- und Signalanlage aufweist.

Eine derartige, aus der EP-A-0 129 221 bekannte Schaltungsanordnung weist eine Steckdose auf, an deren Anschlüssen von einzelnen Lampen der Beleuchtungs- und Signalanlage abgegriffene Signalspannungen für entsprechende Lampen einer Beleuchtungs-und Signalanlage des Hängers abnehmbar sind.

Bei der bekannten Schaltungsanordnung sind die von den Lampen abgegriffenen Signalspannungen unmittelbar mit den Anschlüssen der Steckdose verbunden, so daß die Lampen des Hängers zu den entsprechenden Lampen des Zugfahrzeuges parallel geschaltet sind. Wenn die Lampen des Hängers nicht über eine eigene Sicherung abgesichert sind, fällt die zugeordnete Lampe des Zugfahrzeuges mit aus, wenn in einer Lampe des Hängers ein Kurzschluß vorliegt. In der Regel wird durch diesen Kurzschluß die Sicherung durchbrennen, die in Reihe mit der Lampe des Zugfahrzeuges geschaltet ist.

Eine Absicherung der Lampen des Hängers durch eigene Sicherungen ist insofern problematisch, als die bekannte Schaltungsanordnung häufig erst nachträglich in das Zugfahrzeug eingebaut wird, um beispielsweise einen Pkw als Zugfahrzeug für einen Wohnwagen herzurichten. Da für die nachträglich einzubauenden Sicherungen keine Halterung in dem Zugfahrzeug vorgesehen ist, werden die Sicherungen von Fall zu Fall an unterschiedlichen Stellen in dem Zugfahrzeug zu finden sein. Dies kann im Fehlerfalle zu einer langwierigen Suche führen.

Bei moderneren Zugfahrzeugen werden darüberhinaus die Lampen der Beleuchtungs- und Signalanlage von einer Sicherungsschaltung in Form einer Lampentestüberwachung überwacht, die bereits bei geringen Abweichungen des Lampenstromes von einem vorgegebenen Sollwert eine Fehlfunktion anzeigen und ggf. den Lampenstromkreis öffnen. Eine Parallelschaltung von entsprechenden Lampen des Zugfahrzeuges mit Lampen des Hängers führt wegen des nun doppelt so großen Stromes dazu, daß die Sicherungsschaltung anspringt. Bei diesen Zugfahrzeugen ist folglich ein Nachrüsten mit der bekannten Schaltungsanordnung nicht möglich.

Bei der bekannten Schaltungsanordnung sind zwei Relais vorgesehen, die eine gemeinsame Kontrolleuchte in dem Zugfahrzeug ansteuern, wenn das linke bzw. das rechte Blinklicht des Hängers in Betrieb ist. Auf diese Weise wird dem Fahrer zusätzlich zu der normalen Blinkerkontrolleuchte für das Zugfahrzeug auch angezeigt, ob die Blinklichter des Hängers funktionieren.

Eine Anzeige für die übrigen Lampen der Beleuchtungs- und Signalanlage des Hängers ist nicht vorgesehen. Dies kann im Straßenverkehr zu Sicherheitsproblemen führen, denn der Fahrer kann z.B. nicht erkennen, wenn die Bremslichter seines Hängers ausgefallen sind.

Aus der EP-A-0 129 221 ist es weiterhin bekannt, eine zweite Steckdose vorzusehen, wenn die Bordspannung des Zugfahrzeuges größer ist als die Betriebsspannung der elektrischen Anlage des Hängers. Zu diesem Zweck werden die Signalspannungen der Lampen des Zugfahrzeuges über nachgeschaltete Spannungsregler auf die erforderliche Betriebsspannung des Hängers heruntergeregelt. Auch in diesem Fall sind die Lampen des Hängers zu den Lampen des Fahrzeuges parallel geschaltet, so daß sozusagen ein doppelt so hoher Lampenstrom durch die Sicherungen fließt, was zu den obengenannten Nachteilen führt.

Eine Schaltungsanordnung, die diese Nachteile bereits weitgehend vermeidet, ist aus der DE-A-37 24 916 bekannt.

Die bekannte Schaltungsanordnung ist zwischen die Beleuchtungs- und Signalanlage des Zugfahrzeuges sowie eine entsprechende Beleuchtungs- und Signalanlage des Hängers mit einer Treiberschaltung geschaltet, die Steuersignale von den jeweiligen Hecklampen des Zugfahrzeuges hochohmig abgreift, um eine unerwünschte Beeinflussung der Hecklampen-Stromkreise des Zugfahrzeuges zu vermeiden. Die Treiberschaltung umfaßt ferner eine Überlastsicherung, die im Falle eines hängerseitigen Kurzschlusses den abgegebenen Strom begrenzt.

Zu diesem Zweck sind zwei Vergleicher vorgesehen, die in Abhängigkeit von dem Strom durch die Hecklampe des Zugfahrzeuges und dem Strom durch die zugeordnete Lampe des Hängers mit weiteren Bauteilen derart zusammenwirken, daß der Halbleiterschalter, über den der Strom zu dem Zugfahrzeug fließt, im Kurzschlußfalle getaktet wird, so daß sich nur ein unschädlicher mittlerer Nennstrom einstellt. Ferner ist offenbart, daß der über die Überlastsicherung angesteuerte Halbleiterschalter ein Feldeffekt-Transistor sein kann.

Wegen der im hängerseitigen Kurzschlußfalle erfolgenden Taktung des Halbleiterschalters und der daraus resultierenden Stromstöße ist diese Schaltungsanordnung für den Betrieb in modernen Kraftfahrzeugen nur bedingt geeignet.

Hiervon ausgehend ist es Aufgabe der vorliegenden Erfindung, eine Schaltungsanordnung zu schaffen, mit der auch moderne Zugfahrzeuge zum Ziehen eines Hängers nachzurüsten sind.

Zur Lösung dieser Aufgabe wird erfindungsgemäß eine Schaltungsanordnung für ein Zugfahrzeug eines aus dem Zugfahrzeug und einem Hänger bestehenden Wagenzuges geschaffen, bei der das Zugfahrzeug eine Betriebsspannung zum Betreiben seiner Beleuchtungs- und Signaleinrichtung sowie zumindest eine Steckdose aufweist, an deren Anschlüssen von einzelnen Lampen der Beleuchtungs- und Signalanlage abgegriffene Signalspannungen für entsprechende Lampen einer Beleuchtungs- und Signalanlage des Hängers abnehmbar sind, wobei die jeweiligen Anschlüsse der Steckdose über zugeordnete Treiberschaltungen mit den jeweiligen Signalspannungen beaufschlagt werden, wobei die Treiberschaltungen die Signalspannungen hochohmig von den einzelnen Lampen des Zugfahrzeuges abgreifen und jede Treiberschaltung einen zwischen die Betriebsspannung und den zugeordneten Anschluß der Steckdose geschalteten verlustleistungsarmen sowie ausgangsseitig kurzschlußfesten Transistor aufweist, der eingangsseitig lediglich über Widerstandsstrecken mit den entsprechenden Lampen verbunden ist.

Die der Erfindung zugrundeliegende Aufgabe wird auf diese Weise vollkommen gelöst. Die Signalspannungen der Lampen des Zugfahrzeuges werden als Steuersignale für die Treiberschaltungen verwendet, wobei es wegen des hochohmigen Abgreifens der Signalspannungen zu keinem erhöhten Stromfluß kommt. Die Sicherungsschaltungen von modernen Zugfahrzeugen werden somit nicht ansprechen, denn trotz eines angeschlossenen Hängers werden sie keine quasi "erhöhte" Stromaufnahme durch die Lampen des Zugfahrzeuges feststellen. Bei einem Kurzschluß in dem Hänger wird zwar das Bordnetz des Zugfahrzeuges vorübergehend zusammenbrechen können, aber unmittelbar nach dem Abkoppeln des Hängers ist die Beleuchtungs- und Signalanlage des Zugfahrzeuges wieder betriebsbereit. Es muß jetzt lediglich eine Fehlersuche in dem Hänger durchgeführt werden, bei dem Zugfahrzeug ist maximal die Hauptsicherung auszuwechseln.

Daß die Treiberschaltungen an ihrem Ausgang kurzschlußfest sind, ist besonders vorteilhaft, weil ein Kurzschluß in dem Hänger nicht zu einem Defekt an der in dem Zugfahrzeug angebrachten Schaltungsanordnung führt. Auf diese Weise kann der defekte Hänger abgekoppelt und ein neuer Hänger angekoppelt werden, ohne daß weitere Maßnahmen an dem Zugfahrzeug erforderlich sind. Es ist lediglich der Kurzschluß in dem defekten Hänger zu beseitigen. Zusätzliche Sicherungen in dem Zugfahrzeug müssen nicht vorgesehen werden.

Daß jede Treiberschaltung einen zwischen die Betriebsspannung und den zugeordneten Anschluß der Steckdose geschalteten verlustleistungsarme Transistor, vorzugsweise einen Feldeffekttransistor, aufweist, ist insbesondere unter konstruktiven Aspekten von Vorteil. Wegen der verlustleistungsarmen Ausgangsstufe ist keine Kühlung der Treiberschaltungen erforderlich, so daß die gesamte Schaltungsanordnung als kleines Kästchen nachträglich in das Zugfahrzeug eingebaut werden kann. Die von den einzelnen Lampen des Zugfahrzeuges abgegriffenen Signalspannungen müssen lediglich durch eine Steck- und/oder Lötverbindung mit den Eingängen der Treiberschaltungen verbunden werden, während die Ausgänge der Treiberschaltungen zu der Steckdose führen. Das Nachrüsten bestehender Zugfahrzeuge gestaltet sich so sehr einfach, das Verlegen von leicht von außen zugänglichen Sicherungen ist nicht erforderlich.

Hier ist es weiter bevorzugt, wenn jede Treiberschaltung eine hochohmige invertierende Eingangsstufe aufweist, deren Ausgang mit der Ausgangsstufe verbunden ist.

Durch diese Maßnahme ergibt sich ein schaltungstechnisch sehr einfacher Aufbau der erfindungsgemäßen Schaltungsanordnung, denn der Feldeffekttransistor der Ausgangsstufe kann unmittelbar zwischen die Betriebsspannung und die Anschlüsse der Steckdose geschaltet werden. Der Gateeingang des Feldeffekttransistors, der auf der Betriebsspannung liegen muß, um den Feldeffekttransistor zu sperren, wird von der Eingangsstufe mit der invertierten bzw. negierten Signalspannung der zugehörigen Lampe des Zugfahrzeuges beaufschlagt, so daß bei vorliegender Signalspannung der Gateeingang des Feldeffekttransistors auf einem Potential liegt, das kleiner ist als die Betriebsspannung, wodurch der Feldeffekttransistor durchschaltet und die entsprechende Lampe des Hängers mit Strom versorgt. Außerdem wird auf diese Weise für eineTrennung zwischen dem Eingang und dem Ausgang der Treiberschaltung gesorgt, so daß ein Fehler im Ausgangskreis der Treiberschaltung, beispielsweise ein Kurzschluß der angesteuerten Lampe des Hängers, nicht zu einer Fehlfunktion der entsprechenden Lampe des Zugfahrzeuges führt.

Hier ist es weiterhin bevorzugt, wenn eine Überwachungsschaltung vorgesehen ist, die ermittelt, in welchem Betriebszustand sich ausgewählte, überwachte Lampen der Beleuchtungs-und Signalanlage des Hängers befinden, und die den Betriebszustand auf einer Anzeigeeinheit anzeigt.

Diese Maßnahme ist insofern von Vorteil, als der Fahrer auf der Anzeigeeinheit erkennen kann, ob die von ihm gerade in Betrieb genommene Lampe des Hängers auch tatsächlich funktioniert. Dies ist insbesondere unter Sicherheitsaspekten von Vorteil, denn der Fahrer kann beispielsweise sofort erkennen, ob das Bremslicht seines Hängers noch in Ordnung ist.

Weiterhin ist es bevorzugt, wenn die Überwachungsschaltung für den Lampenstrom jeder überwachten Lampe des Hängers eine Meßschaltung aufweist, die auf ihrer Ausgangsleitung ein Ausgangssignal erzeugt, das einen ersten logischen Zustand einnimmt, wenn ein Lampenstrom innerhalb eines vorgewählten Stromwertebereiches fließt, und das einen zweiten logischen Zustand einnimmt, wenn bei der überwachten Lampe Leerlauf oder Kurzschluß folgt.

Diese Maßnahme ist insofern von Vorteil, als der Fahrer bei jeder der überwachten Lampen des Hängers erkennen kann, ob sie betriebsbereits ist oder ob Kurzschluß bzw. Leerlauf vorliegt. Dies ist nicht nur unter dem Sicherheitsaspekt, sondern auch im Hinblick auf eine evtl. erforderliche Reparatur der Beleuchtungs- und Signalanlage des Hängers von Vorteil.

Bei diesem Ausführungsbeispiel ist es weiterhin bevorzugt, wenn zu den überwachten Lampen des Hängers dessen linkes und rechts Blinklicht zählen und wenn die Ausgangsleitungen der Meßschaltungen beider Blinklichter miteinander über eine ODER-Schaltung verknüpft sind, deren Ausgang zu einer gemeinsamen Kontrolleuchte für beide Blinklichter führt.

Diese Maßnahme ist insbesondere unter schaltungstechnischen Gesichtspunkten von Vorteil, denn es ist nur eine Kontrolleuchte für beide Blinklichter erforderlich. Während der Fahrer an den Blinklichtkontrolleuchten des Zugfahrzeuges erkennen kann, ob der linke oder der rechte Blinker in Betrieb ist, kann er anhand der zusätzlichen Kontrolleuchte erkennen, ob das zugeordnete Blinklicht des Hängers ebenfalls in Betrieb ist. Dies ist somit auch unter Sicherheitsaspekten von Vorteil.

Es ist weiterhin bevorzugt, wenn für einige der überwachten Lampen des Hängers jeweils eine Vergleicherschaltung vorgesehen ist, die einen an der jeweiligen Treiberschaltung abgegriffenen Sollwert mit dem Ausgangssignal der zugeordneten Meßschaltung vergleicht und deren Ausgang zu der Anzeigeeinheit geführt ist.

Auch diese Maßnahme ist unter konstruktiven Aspekten von Vorteil, denn durch einen einfachen Vergleich zwischen dem Sollwert aus der Treiberschaltung, der auch die Signalspannung der Zugfahrzeuglampe selbst sein kann, mit dem Ausgangssignal der Meßschaltung kann entschieden werden, ob ein Fehler in der Schaltungsanordnung und/oder in dem Hänger vorliegt. Wird beispielsweise eine Lampe des Hängers wegen eines Fehlers in der Treiberschaltung mit Strom versorgt, obwohl die entsprechende Lampe des Zugfahrzeuges ausgeschaltet ist, so erfaßt die Vergleicherschaltung eine Abweichung zwischen Sollwert und Istwert und meldet dies über die Anzeigeeinheit dem Fahrer. Andererseits wird ebenfalls ein Fehler gemeldet, wenn die Lampe des Zugfahrzeuges eingeschaltet ist, aber wegen eines Glühfadenbruches z.B. die Lampe des Hängers nicht leuchtet. Weiterhin ist es bevorzugt, wenn die Ausgänge der Vergleicherschaltungen für die überwachten Lampen von Bremslicht und linkem sowie rechtem Standlicht des Hängers über eine ODER-Schaltung miteinander verknüpft sind, deren Ausgang zu einer gemeinsamen Kontrolleuchte in der Anzeigeeinheit führt.

Diese Maßnahme führt zu einem einfachen Aufbau der Schaltungsanordnung, denn für drei überwachte Lampen ist lediglich eine Kontrolleuchte erforderlich. Dies ist insofern sinnvoll, als das Standlicht, sei es nun rechts oder links, nur in den seltensten Fällen zusammen mit dem Bremslicht in Betrieb sein wird. Hierdurch erleichtert sich auch die Fehlersuche, denn trotz der einen Kontrolleuchte kann sofort entschieden werden, bei welcher Lampe des Hängers beispielsweise ein Kurzschluß vorliegt. Zu diesem Zweck werden sämtliche Lampen des Zugfahrzeuges ausgeschaltet und dann nacheinander einzeln in Betrieb genommen. Über die Kontrolleuchte ist sofort zu erkennen, in welcher Lampe des Hänges eine Fehlfunktion vorliegt.

Weiterhin ist es bevorzugt, wenn ein Taktgeber für die Kon trolleuchte vorgesehen ist, der in Abhängigkeit von dem Ausgang der ODER-Schaltung die Kontrolleuchte rhytmisch blinken läßt.

Dies ist insofern von Vorteil, als eine rhytmische Fehleranzeige von dem Fahrer leichter wahrgenommen wird, als ein Dauersignal.

Weiterhin ist es hier bevorzugt, wenn eine gemeinsame Kontrolleuchte für die Blinklichter, die Standlichter und das Bremslicht vorgesehen ist, wobei die Taktfrequenz des Taktgebers von der Blinkfrequenz der Blinklichter verschieden ist.

Diese Maßnahme ist insbesondere unter konstruktiven Gesichtspunkten von Vorteil, da sie zu einem einfachen Aufbau der Schaltungsanordnung führt. Weiterhin gestaltet sich das Nachrüsten bestehender Fahrzeuge sehr einfach, denn es ist lediglich eine einzige Kontrolleuchte zusätzlich in dem Zugfahrzeug zu installieren. Anhand der unterschiedlichen Blinkfrequenzen kann der Fahrer unterscheiden, ob die Kontrolleuchte die einwandfreie Funktion der Blinklichter oder eine Fehlfunktion der anderen überwachten Lampen anzeigt.

Hier ist es weiterhin bevorzugt, wenn die Schaltungsanordnung über zwei voneinander unabhängige und entkoppelte Versorgungsleitungen mit der Betriebsspannung verbunden ist, wenn die Ausgangsstufen der Treiberschaltungen mit der einen oder der anderen Versorgungsleitung verbunden sind und wenn die Spannungspegel beider Versorgungsleitungen von der Überwachungsschaltung überwacht und im Fehlerfall auf einer Kontrolleuchte angezeigt werden.

Diese Maßnahme verhindert auf vorteilhafte und konstruktiv einfache Weise einen vollständigen Ausfall der Schaltungsanordnung, wenn der Spannungspegel auf einer der beiden Versorgungsleitungen infolge eines Kurzschlusses in einer der Lampen des Hängers zusammenbricht. Über die andere Versorgungsleitung wird nämlich die Betriebsspannung in der Schaltungsanordnung aufrecht erhalten, so daß eine Ansteuerung der Kontrolleuchte noch möglich ist. Ohne diese entkoppelten beiden Versorgungsleitungen würde ein Kurzschluß in dem Hänger nicht erkannt werden können.

Weiterhin ist es bevorzugt, wenn die gemeinsame Kontrollleuchte auch für die Spannungspegel vorgesehen ist.

Hierdurch wird auf konstruktiv einfache und vorteilhafte Weise die bereits oben erwähnte Kontrolleuchte auch für die Überwachung der Spannungspegel auf den Versorgungsleitungen eingesetzt.

Bei diesem Ausführungsbeispiel ist es weiterhin bevorzugt, wenn jede Meßschaltung einen in Reihe mit der jeweiligen Treiberschaltung und dem jeweiligen Anschluß der Steckdose geschalteten niederohmigen Meßwiderstand und eine Verstärkerschaltung aufweist, die aus dem Spannungsabfall über dem Meßwiderstand das Ausgangssignal erzeugt.

Auch diese Maßnahme ist unter konstruktiven Gesichtspunkten von Vorteil, denn der in Reihe mit dem Anschluß der Steckdose geschaltete und damit von dem Lampenstrom durchflossene Meßwiderstand ermöglicht auf einfache Weise das Abgreifen eines Meßsignales, das den Lampenstrom wiedergibt.

Hier ist es weiterhin bevorzugt, wenn die Verstärkerschaltung, die am Ausgang der Treiberschaltung anstehende Spannung auf ihre Ausgangsleitung durchschaltet, wenn der Strom durch den Meßwiderstand einen Schwellwert überschreitet.

Auf diese konstruktiv einfache Weise wird eine Ausgangsspannung erzeugt, die angibt, ob die entsprechende Lampe mit Spannung beaufschlagt ist oder nicht. Da das Durchschalten jedoch zusätzlich davon abhängt, ob über dem Meßwiderstand eine Spannung abfällt, wird diese Ausgangsspannung nur dann geliefert, wenn der reguläre Lampenstrom durch die Lampe fließt. Im Leerlauffall, wenn also der Glühfaden gebrochen sein sollte, schaltet die Verstärkerschaltung nicht.

Hierbei ist es weiterhin bevorzugt, wenn der Widerstandswert des Meßwiderstandes in der Größenordnung des Ausgangsinnenwiderstandes der Treiberschaltung liegt.

Auf diese sehr einfache Weise ist es mit der Meßschaltung ebenfalls möglich, zu erkennen, ob ein Kurzschluß in der entsprechenden Lampe des Hängers vorliegt. Im Kurzschlußfall liegt nämlich der Ausgangsinnenwiderstand der Treiberschaltung in Reihe mit dem Meßwiderstand auf Masse, so daß zwischen dem Ausgangsinnenwiderstand und dem Meßwiderstand eine Teilung der Betriebsspannung erfolgt. Wenn beide Widerstände etwa gleich groß sind, wird die Betriebsspannung somit halbiert, da diese wegen des durch den Meßwiderstand fließenden Stromes von der Verstärkerschaltung auf ihre Ausgangsleitung durchgeschaltet wird. Die Betriebsspannung des Zugfahrzeuges wird in der Regel 12 Volt betragen, so daß die Schaltungsanordnung mit den hierfür vorgesehenen Logikbausteinen mit hohem Störabstand realisiert sein wird, bei denen der logisch L-Pegel deutlich oberhalb der halben Betriebsspannung liegt. Trotz des durch den Meßwiderstand fließenden Stromes ist damit das Ausgangssignal auf der Ausgangsleitung der Meßschaltung so klein, daß wie in dem oben beschriebenen Leerlauffall das Vorliegen eines Fehlers angezeigt wird.

In einem weiteren Ausführungsbeispiel ist es bevorzugt, wenn zumindest für einige der von einer Sicherungseinrichtung des Zugfahrzeuges gesicherten Lampen je eine Treiberschaltung vorgesehen ist.

Diese Maßnahme hat den Vorteil, daß bei solchen Zugfahrzeugen, bei denen nur einige Lampen über die Sicherungseinrichtung gesichert sind, nur für die entsprechend gesicherten Lampen Treiberschaltungen benötigt werden. In diesem Fall kann die neue Schaltungsanordnung sehr kompakt und vor allem sehr preisgünstig ausgeführt werden.

Hierbei ist es bevorzugt, wenn zu den gesicherten Lampen des Zugfahrzeuges dessen Bremslicht sowie dessen rechtes und linkes Standlicht gehören.

Vorteilhaft ist hier, daß nur die drei wichtigsten Signallampen des Zugfahrzeuges und des Hängers über hochohmige Treiberschaltungen miteinander verbunden werden. Gerade bei neueren Zugfahrzeugen sind nämlich diese Lampen über eine gesonderte Sicherungseinrichtung gesichert, während die anderen Lampen lediglich über eine gemeinsame Hauptsicherung mit der Bordelektrik und/oder der Batterie verbunden sind. Die neue Schaltungsanordnung kann hier konstruktiv sehr einfach aufgebaut sein, denn es werden lediglich drei Treiberschaltungen benötigt.

Weitere Vorteile ergeben sich aus der Beschreibung und der beigefügten Zeichnung.

Es versteht sich, daß die vorstehend genannten und die nachstehend noch zu erläuternden Merkmale nicht nur in der jeweils angegebenen Kombination, sondern auch in anderen Kombinationen und in Alleinstellung verwendbar sind, ohne den Rahmen der vorstehenden Erfindung zu verlassen.

Die Erfindung ist in der Zeichnung dargestellt und wird in der nachfolgenden Beschreibung näher erläutert. Es zeigen:
- Fig. 1: in prinzipieller Darstellung die über eine erfindungsgemäße Schaltungsanordnung zusammengeschalteten Beleuchtungs- und Signalanlagen eines Zugfahrzeuges und eines Hängers;
- Fig. 2: ein schematisches Blockschaltbild der Schaltungsanordnung aus Fig. 1;
- Fig. 3: ein schaltungstechnisch ausgeführtes Beispiel für eine Treiberschaltung und eine Meßschaltung der Schaltungsanordnung aus Fig. 2;
- Fig. 4: ein weiteres Ausführungsbeispiel einer erfindungsgemäßen Schaltungsanordnung in einer Darstellung ähnlich Fig. 1; und
- Fig. 5: die Schaltungsanordnung nach Fig. 4, mit je einem Schalttransistor als Treiberschaltung.

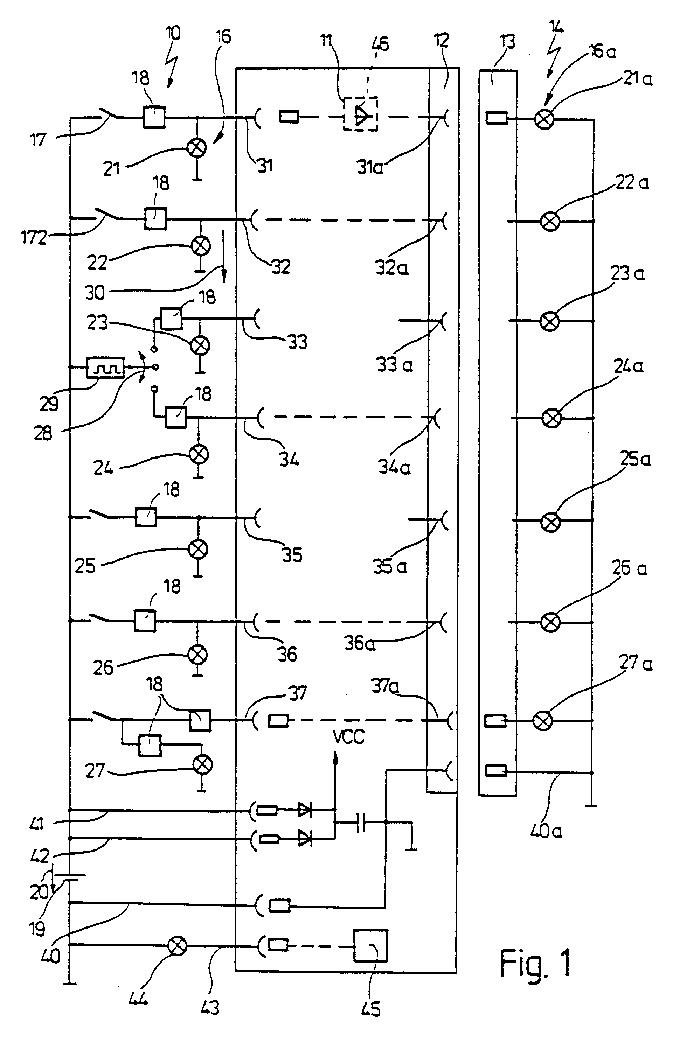

In Fig. 1 ist mit 10 eine elektrische Beleuchtungs- und Signalanlage eines nicht näher dargestellten Zugfahrzeuges bezeichnet, die mit einer Schaltungsanordnung 11 verbunden ist. Die Schaltungsanordnung 11 weist eine Steckdose 12 auf, die einem Stecker 13 zugeordnet ist, über den eine elektrische Beleuchtungs- und Signalanlage 14 eines ebenfalls nicht dargestellten Hängers mit der elektrischen Anlage des Zugfahrzeuges verbunden werden kann.

In Fig. 1 sind mit 16 bzw. 16a einzelne Lampen der elektrischen Beleuchtungs- und Signalanlagen 10 bzw. 14 bezeichnet. Die Lampen 16 des Zugfahrzeuges sind wahlweise über Schalter 17 und Sicherungseinrichtungen 18 mit einer Batterie 19 verbindbar, die das Zugfahrzeug mit seiner Betriebsspannung 20 versorgt. Die Schalter 17 werden wahlweise von dem Fahrer des Zugfahrzeuges geschlossen, um einzelne Lampen 16 mit Strom zu versorgen. Aufgabe der Sicherungseinrichtungen 18 ist es dabei, bei einem zu hohen Stromfluß durch die Lampen 16, wie es beispielsweise durch einen Kurzschluß geschehen kann, die Lampen 16 trotz geschlossener Schalter 17 von der Batterie 19 abzukoppeln und somit zu verhindern, daß das übrige elektrische System des Zugfahrzeuges wegen der überlasteten Batterie 19 zusammenbricht.

In dem gezeigten Ausführungsbeispiel weist die Beleuchtungs- und Signalanlage des Zugfahrzeuges ein Rückfahrlicht 21, ein Nebelschlußlicht 22, ein linkes und ein rechtes Blinklicht 23 bzw. 24, ein Bremslicht 25, sowie ein linkes und ein rechtes Standlicht 26 bzw. 27 auf. Die entsprechenden Lichter der Beleuchtungs- und Signalanlage 14 des Hängers sind mit 21a bis 27a bezeichnet.

Wie üblich, weist das Zugfahrzeug einen Fahrtrichtungsschalter 28 auf, der drei Stellungen einnehmen kann. Während er in seiner Mittenstellung unwirksam ist, verbindet er in seinen beiden anderen Stellungen einen Blinkgeber 29 mit dem linken oder rechten Blinklicht 23 bzw. 24.

Bei geschlossenem Schalter 17 liegt an den Lampen 16 eine Signalspannung 30 an, die dazu führt, daß die Lampen 16 mit Strom versorgt werden und leuchten. Die Signalspannungen 30 der Lichter 21 bis 27 sind über Leitungen 31 bis 37 mit der Schaltungsanordnung 11 verbunden. In der Schaltungsanordnung 11 werden die auf den Leitungen 31 bis 37 anstehenden Signalspannungen in noch näher zu beschreibender Weise verarbeitet und zu Anschlüssen 31a bis 37a in der Steckdose 12 geführt. So gelangt beispielsweise die Signalspannung 30 des Nebelschlußlichtes 22 über die Leitung 32 in die Schaltungsanordnung 11 hinein und wird von dieser an dem Anschluß 32a über die Steckdose 12 an den Stecker 13 gegeben. Wenn folglich der Schalter 172 des Nebelschlußlichtes 22 geschlossen ist, leuchtet auch die Nebelschlußleuchte 22a des Hängers. Zu diesem Zweck ist eine mit 40 bezeichnete Masseleitung von der Batterie 19 durch die Schaltungsanordnung 11 hindurch in den Stecker 13 geschleift, wo sie mit 40a bezeichnet ist. Es ist zu erkennen, daß sämtliche Lampen 16a einerseits mit dieser Masseleitung 40a und andererseits mit dem Stecker 13 verbunden sind.

Für das rechte Standlicht 27 ist gezeigt, daß auch zwei Sicherheitsschaltungen 18, 18'vorgesehen sein können, von denen eine die Lampe 27 des Zugfahrzeuges und die andere die Lampe 27a des Hängers absichert. Auf die Sicherungsschaltung 18' kann jedoch verzichtet werden, wenn die erfindungsgemäße Schaltungsanordnung 11 verwendet wird.

Die Schaltungsanordnung 11 wird über zwei Versorgungsleitungen 41, 42 mit der Betriebsspannung 20 versorgt.

Weiterhin ist Fig. 1 zu entnehmen, daß die Schaltungsanordnung 11 über eine Leitung 43 eine Kontrolleuchte 44 treibt, über die eine Überwachungsschaltung 45 in der Schaltungsanordnung 11 den Betriebszustand der Lampen 16a des Hängers anzeigt.

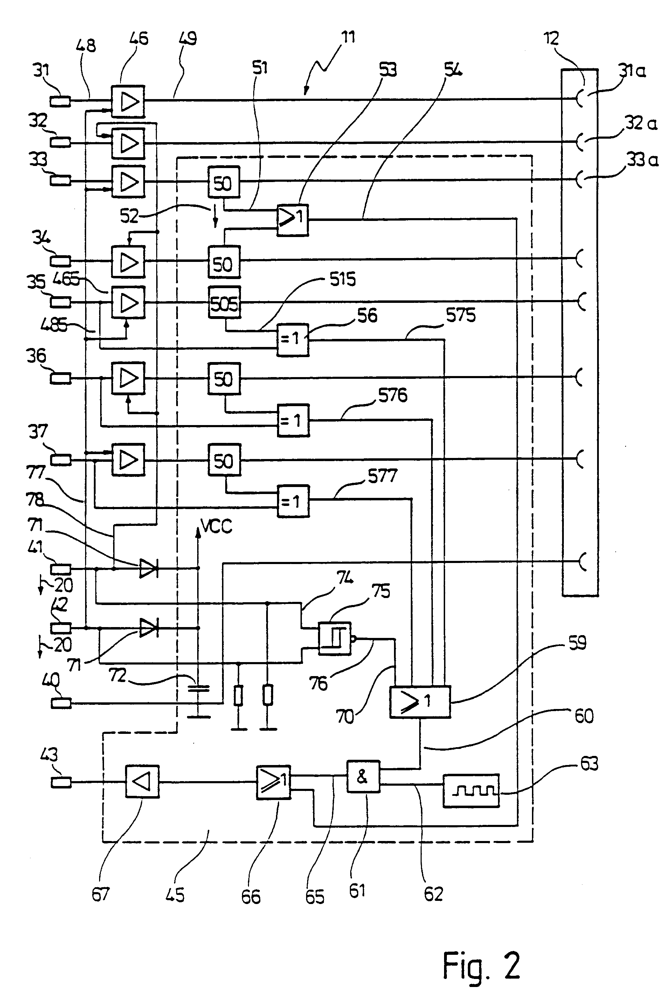

In Fig. 2 ist die Schaltungsanordnung 11 in Form eines Blockschaltbildes detaillierter dargestellt. Es ist zu erkennen, daß die an den Leitungen 31 bis 37 anstehenden Signalspannungen 30 jeweils mit einer in Fig. 1 lediglich angedeuteten Treiberschaltung 46 von den Lampen 16 des Zugfahrzeuges abgenommen und zu den Lampen 16a des Hängers geführt sind. Jede der sieben Treiberschaltungen 46 weist einen hochohmigen Eingang 48 auf, der die entsprechende Signalspannung 30 der zugeordneten Lampe 16 nicht belastet. An ihren Ausgängen 49 sind die Treiberschaltungen 46 kurzschlußfest, so daß auch bei einem Kurzschluß der Lampen 16a die Treiberschaltungen 46 nicht zerstört werden. Wenn der Stecker 13 eines defekten Hängers aus der Steckdose 12 herausgezogen ist, ist somit die Schaltungsanordnung 11 wieder betriebsbereit, ein Austausch oder eine Wartung der Treiberschaltungen 46 oder anderer Komponenten der Schaltungsanordnung 11, wie Sicherungen, ist nicht erforderlich.

Während die Leitungen 31 und 32 von Rückfahrlicht 21 und Nebelschlußlicht 22 unmittelbar von den Ausgängen 49 der Treiberschaltungen 46 zu den Anschlüssen 31a bzw. 32a der Steckdose 12 geführt sind, sind sämtliche anderen fünf Treiberschaltungen 46 an ihren Ausgängen 49 mit Meßschaltungen 50 verbunden. Die Meßschaltungen 50 führen dann die Signalspannungen zu den Anschlüssen 33a bis 37a der Steckdose 12.

Jede der fünf Meßschaltungen 50 weist eine Ausgangsleitung 51 auf, auf der sie ein Ausgangssignal 52 erzeugt, die ein Maß für den Betriebszustand der jeweils von der zugehörigen Treiberschaltung 46 über die Meßschaltung 50 betriebenen Lampe 16a des Hängers ist.

Die beiden Ausgangsleitungen 51 der über die Leitungen 33 und 34 den Blinklichtern 23 bzw. 24 zugeordneten Meßschaltungen 50 sind mit einer ODER-Schaltung 53 verbunden. Die ODER-Schaltung 53 ist mit ihrem Ausgang 54 in noch näher zu beschreibender Weise über die Leitung 43 mit der Kontrollleuchte 44 verbunden. Wenn einer der beiden Blinker 23, 24 in Betrieb ist, so wird über die beiden Ausgangsleitungen 51 der zugeordneten Meßschaltungen 50 an dem Ausgang 54 der ODER-Schaltung 53 ein Ausgangssignal erzeugt, das seinen Spannungspegel in dem Rhytmus der Blinkfrequenz ändert. Dieses Blinken wird an der Kontrolleuchte 44 angezeigt, so daß der Fahrer erkennen kann, ob die Blinklichter 23a und 24a des Hängers in Betrieb sind. Liegt ein Kurzschluß oder ein Leerlauf vor, so folgen die Ausgangsspannungen 52 der Meßschaltungen 50 den Steuerspannungen 30 nicht, so daß auch die Kontrolleuchte 44 nicht blinkt. Der Fahrer kann so einen Fehlerzustand sofort erkennen.

Die Kontrolleuchte 44 kann so gleichzeitig als Störungsanzeige dienen. Als Weiterbildung kann auch vorgesehen sein, die Kontrollleuchte 44 im Störungsfall mit veränderter Blinkfrequenz anzusteuern.

Die Meßschaltungen 50 für das Bremslicht 25 sowie die beiden Standlichter 26 und 27 entsprechen den Meßschaltungen 50 für die Blinklichter 23 und 24. Die äußere Verschaltung der drei letztgenannten Meßschaltungen soll jetzt anhand der Meßschaltung 505 für das Bremslicht 25 näher erläutert werden.

Die Ausgangsleitung 515 der Meßschaltung 505 wird in einer Vergleicherschaltung 56 mit der Eingangsspannung 485 der zugeordneten Treiberschaltung 465 verglichen. Eine entsprechende Vergleicherschaltung 56 ist auch für die beiden Standlichter 26 und 27 vorgesehen.

Die Vergleicherschaltungen 56 erzeugen an ihren Ausgängen 57 Vergleichsspannungen, die angeben, ob das Ausgangssignal 52 von dem an dem Eingang 48 der Treiberschaltung 46 anstehenden Signal abweicht.

Die Ausgänge 575, 576 und 577 sämtlicher drei Vergleicherschaltungen 56 sind über eine ODER-Schaltung 59 miteinander verknüpft. Die ODER-Schaltung 59 wiederum weist einen Ausgang 60 auf, der über eine UND-Schaltung 61 mit einem Ausgang 62 eines Taktgebers 63 verknüpft ist. Die UND-Schaltung 61 liefert somit an ihrem Ausgang 65 immer dann das Taktsignal des Taktgebers 63, wenn bei einem der drei Lichter 25, 26 oder 27 das Ausgangssignal 575, 576 oder 577 anzeigt, daß ein fehlerhafter Betriebszustand der zugehörigen Lampen 16a vorliegt. Dieses Taktsignal wird über eine weitere ODER-Schaltung 66 und einen nachgeschalteten Anzeigetreiber 67 zu der Kontrolleuchte 44 geführt. Über die ODER-Schaltung 66 wird ebenfalls der den Blinkern 23 und 24 zugeordnete Ausgang 54 der ODER-Schaltung 53 zu der Kontrolleuchte 44 geführt.

Um unterscheiden zu können, ob die Kontrolleuchte 44 das Blinken der Blinker 23a, 24a anzeigt oder aber eine Betriebsstörung bei dem Bremslicht 25 oder den Standlichtern 26, 27, ist die Taktfrequenz des Taktgenerators 63 deutlich von der Blinkfrequenz der Blinklichter 23, 24 verschieden.

Anhand einer einzigen Kontrolleuchte 44 kann der Fahrer somit erkennen, ob und ggf. welche Betriebsstörung bei welcher Lampe 16a vorliegt.

In Fig. 2 ist zu erkennen, daß die ODER-Schaltung 59 einen vierten Eingang 70 aufweist, über den an der Kontrolleuchte 44 ebenfalls eine Fehlfunktion der über die Versorgungsleitungen 41 und 42 in die Schaltungsanordnung 11 eingespeisten Betriebsspannung 20 angezeigt werden kann.

Die Versorgungsleitungen 41, 42 sind über Entkopplungsdioden 71 zusammengeschaltet und liefern so eine Betriebsspannung VCC für die Schaltungsanordnung 11. Zwischen den Versorgungsleitungen 41, 42 und den Dioden 71 wird die Betriebsspannung 20 zu Kontrollzwecken abgegriffen und zu Eingängen 74 eines Schmitt-Triggers 75 geführt. In dem Schmitt-Trigger 75 sind die Eingänge 74 nach der Art einer UND-Schaltung miteinander verknüpft. Wenn der Signalpegel an einer der beiden Versorgungsleitungen 41, 42 somit zusammenbricht, gibt der Schmitt-Trigger 75 über seinen invertierenden Ausgang 76 ein logisches H-Signal an den Eingang 70 der ODER-Schaltung 59 ab. Dies führt dazu, daß der Ausgang 62 des Taktgebers 63 zu der Kontrollleuchte 44 durchgeschaltet wird, die folglich anfängt zu blinken.

Die Versorgungsleitung 42 ist über eine Stromleitung 77 mit den vier Treiberschaltungen 46 für das Rückfahrlicht 21a, das linke Blinklicht 23a, das Bremslicht 25a sowie das rechte Standlicht 27a verbunden. Die Versorgungsleitung 41 wiederum ist über eine Stromleitung 78 mit den Treiberschaltungen 46 für die Nebelschlußleuchte 22a, das rechte Blinklicht 24a sowie das linke Standlicht 26a verbunden. Auf diese Weise ist einerseits für Redundanz gesorgt, denn wenn eine der beiden Versorgungsleitungen 41, 42 ausfällt, so sorgt doch die zweite Versorgungsleitung 42, 41 dafür, daß einerseits die Betriebsspannung VCC aufrecht erhalten wird und andererseits, daß noch gewisse Treiber 46 der Schaltungsanordnung 11 in Betrieb sind. Wenn beispielsweise ein Kurzschluß in dem Nebelschlußlicht 22a dazu führt, daß der Spannungspegel auf der Versorgungsleitung 41 zusammenbricht, so bleibt davon die Versorgungsleitung 42 wegen der Entkopplungsdioden 71 unbetroffen. Über die Versorgungsleitung 42 wird die Versorgungsspannung VCC für die einzelnen Bauelemente der Schaltungsanordnung 11 aufrecht erhalten, so daß über den Schmitt-Trigger 75, die ODER-Schaltung 59 und die UND-Schaltung 61 der Taktgeber 63 die Kontrolleuchte 44 ansteuern kann.

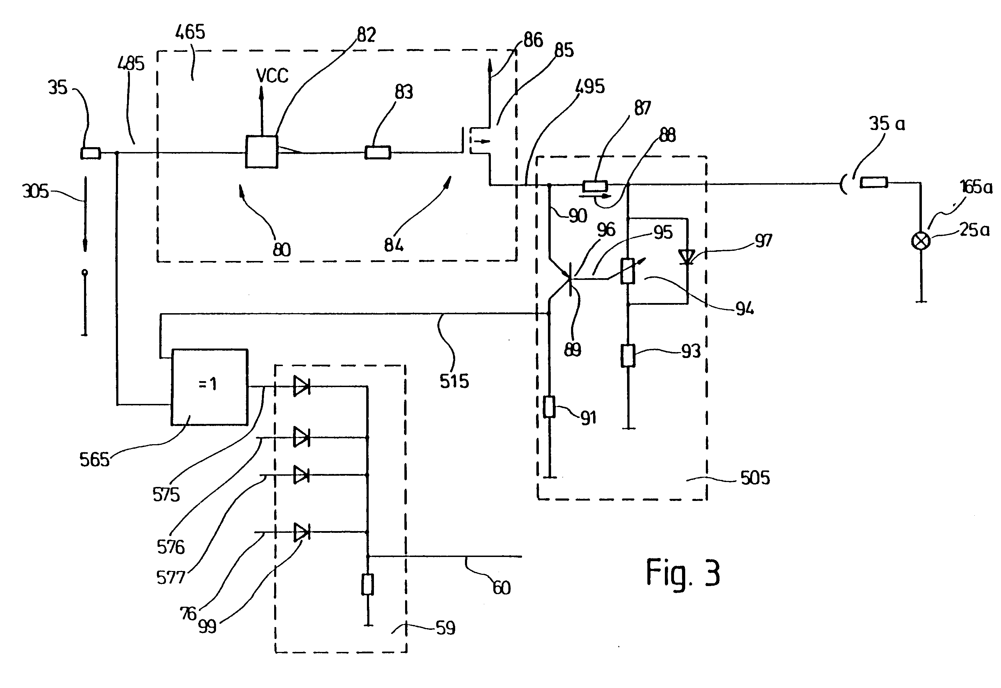

In Fig. 3 sind für das Bremslicht 25a die Treiberschaltung 56 und die Meßschaltung 50 als Treiberschaltung 465 und Meßschaltung 505 detaillierter dargestellt.

Die an der Leitung 35 anstehende Signalspannung 305 des Bremslichtes 25 gelangt über den Eingang 485 der Treiberschaltung 465 zunächst in deren Eingangsstufe 80, die eine Inverterschaltung 82 aufweist. Die Inverterschaltung 82 hat einen hochohmigen Eingangswiderstand, so daß die Signalspannung 305 nicht belastet wird. Über einen Längswiderstand 83 gelangt die von der Inverterschaltung 82 invertierte Signalspannung 305 zu einer Ausgangsstufe 84 der Treiberschaltung 465. Die Ausgangsstufe 84 besteht im wesentlichen aus einem selbstsperrenden Feldeffekttransistor 85, dessen Gate als Steuereingang mit dem Längswiderstand 83 verbunden ist. Von den beiden anderen Elektroden des Feldeffekttransistors 85 ist eine - wie mit dem Pfeil 86 angedeutet - über die Stromleitung 77 und die Versorgungsleitung 42 mit der Betriebsspannung 20 versorgt. Die andere Elektrode des Feldeffekttransistors 85 stellt den Ausgang 495 der Treiberschaltung 465 dar, der in die Meßschaltung 505 hineingeht.

Über einen in Reihe mit dem Feldeffekttransistor 85 geschalteten Meßwiderstand 87 gelangt die Versorgungsspannung 20 schließlich zu dem Anschluß 35a der Steckdose 12 und von dieser über einen entsprechenden Kontakt des Steckers 13 zu dem Bremslicht 25a des Hängers. Über dem Meßwiderstand 87 fällt eine bei 88 angedeutete Meßspannung ab, die von einer wie folgt aufgebauten Verstärkerschaltung abgegriffen wird:

Ein Bipolartransistor 89 ist mit seinem Emitter 90 an die Eingangsseite des Meßwiderstandes 87 geschaltet und mit seinem Kollektor über einen Kollektorwiderstand 91 auf Masse gelegt. An der anderen Seite des Meßwiderstandes 87 ist zwischen dem Anschluß 35a und Masse ein Spannungsteiler bestehend aus einem Festwiderstand 93 und einem Potentiometer 94 geschaltet. Das Potentiometer 94 führt mit seinem Mittelabgriff 95 zu der Basis 96 des Transistors 89. Das Potentiometer 94 dient zur Schwellwerteinstellung, wobei eine zu dem Potentiometer 94 parallel geschaltete Diode 97 zur Stabilisierung des Spannungsabfalls über dem gesamten Potentiometer 94 dient.

Die an der Ausgangsleitung 515 anstehende Kollektorspannung des Transistors 89 gelangt in die Vergleicherschaltung 56, in die ebenfalls die Signalspannung 305 geführt ist. Der Ausgang 575 der Vergleicherschaltung 565 führt zu der ODER-Schaltung 59, die in dem gezeigten Ausführungsbeispiel aus Fig. 3 ein Diodenkoppelnetzwerk 99 ist. In dieser sogenannten verdrahteten Logig sind sämtliche Ausgangsleitungen 575, 576 und 577 sowie der Ausgang 76 des zur Überwachung der Versorgungsleitungen 41, 42 vorgesehenen Schmitt-Triggers 75 zusammengeführt. Sobald eine der vier Eingangsleitungen der ODER-Schaltung 59 auf logisch H geht, nimmt dessen Ausgang 60 diesen Wert an.

Im folgenden sollen die vier möglichen Betriebszustände der in Fig. 3 gezeigten Schaltung diskutiert werden, nämlich ausgeschaltetes Bremslicht, eingeschaltetes Bremslicht ohne Betriebsstörung, eingeschaltetes Bremslicht mit Glühfadenbruch des Bremslichtes 25a und eingeschaltetes Bremslicht mit Kurzschluß in dem Bremslicht 25a.

Wenn das Bremslicht 25 abgeschaltet bzw. nicht betätigt ist, weist die Signalspannung 305 einen niedrigen Spannungspegel auf, der einem logisch-L-Pegel entspricht. Die Inverterschaltung 82 beaufschlagt dementsprechend die Gate-Elektrode des Feldeffekttransistors 85 mit einer Spannung, die der Betriebsspannung entspricht, so daß der Feldeffekttransistor 85 sperrt. In diesem Fall fließt kein Strom durch den Meßwiderstand 87 und der Transistor 89 ist nicht durchgeschaltet. Die Ausgangsleitung 515 der Meßschaltung 505 liegt dementsprechend auf Masse-Potential, so daß beide Eingänge der Vergleicherschaltung 565 auf logisch L liegen. Der Ausgang 575 ist dementsprechend ebenfalls logisch L.

Wird jetzt der zugehörige Schalter 17 geschlossen, so nimmt die Signalspannung 305 in etwa den Wert der Betriebsspannung 20 an, weist also H-Pegel auf. Über die Inverterschaltung 82 wird der Feldeffekttransistor 85 jetzt durchgeschaltet, wobei durch den Meßwiderstand 87 der Betriebsstrom der Lampe 165a des Bremslichtes 25a aus dem Hänger fließt. Die dabei über dem Meßwiderstand 87 abfallende Meßspannung 88 addiert sich zu dem durch das Potentiometer 94 eingestellten Schwellwert und der Transistor 89 schaltet durch. Über dem Kollektorwiderstand 91 fällt jetzt etwa die Betriebsspannung 20 ab, so daß an den beiden Eingängen der Vergleicherschaltung 565 logisch H-Potential anliegt. Der Ausgang 575 ist wieder logisch L.

Sollte jetzt der Glühfaden der Lampe 165a durchbrechen, so geht der Strom durch den Meßwiderstand 87 stark zurück. Es fließt lediglich ein kleiner Strom durch die in Reihe mit dem Widerstand 93 liegende Parallelschaltung aus dem Potentiometer 94 und der Stabilisierungsdiode 97. Der Spannungsabfall zwischen Ermitter 90 und Basis 96 des Transistors 89 reicht nicht aus, um diesen durchzuschalten. Damit liegt der Kollektor des Transistors 89 und somit die Ausgangsleitung 515 auf logisch L.

Die Eingänge der Vergleicherschaltung 565 weisen somit unterschiedliche logische Potentiale auf, so daß die Ausgangsleitung 575 auf logisch H geht und über den Ausgang 60 der ODER-Schaltung 59 und die UND-Schaltung 61 den Taktgeber 63 zu der Kontrolleuchte 44 durchschaltet. Die Kontrolleuchte fängt an, mit der Taktfrequenz des Taktgebers 63 zu blinken und signalisiert einen fehlerhaften Betriebszustand.

Es sei jetzt angenommen, daß beispielsweise aufgrund eines Auffahrunfalles die Lampe 165a einen Kurzschluß aufweist, so daß der Anschluß 35a auf Masse liegt. Durch den Meßwiderstand 87 fließt jetzt ein erheblich größerer Strom, der lediglich durch den Ausgangsinnenwiderstand des kurzschlußfesten Feldeffekttransistors 85 begrenzt wird. Der Ausgangsinnenwiderstand des Feldeffekttransistors 85 ist so gering, daß die Verlustleistung in dem Feldeffekttransistor 85 lediglich zu einer geringen Erwärmung führt. Es ist folglich nicht erforderlich, die Feldeffekttransistoren 85 der sieben Treiberschaltungen 46 mit Kühlkörpern zu versehen.

Der Spannungsabfall 88 führt jetzt dazu, daß der Transistor 89 durchschaltet. An seinem Emitter 90 liegt jedoch nicht mehr die volle Betriebsspannung 20 an, sondern eine durch den aus Meßwiderstand 87 und Ausgangsinnenwiderstand des Feldeffekttransistors 85 gebildeten Spannungsteilers bestimmte kleinere Spannung. Da der Widerstandswert des Meßwiderstandes 87 und des Ausgangsinnenwiderstandes etwa gleich groß sind, fällt über dem Kollektorwiderstand 91 weniger als die halbe Betriebsspannung 20 ab. In dem gezeigten Ausführungsbeispiel beträgt die Betriebsspannung 20 beispielsweise 12 Volt, und die einzelnen Logigbauteile der Schaltungsanordnung 11 sind dementsprechend mit hohem Störabstand ausgelegt. In diesem Falle ist der L-Pegel ca. 7 Volt, so daß auf der Ausgangsleitung 515 ein logisch L-Signal ansteht.

Wegen der nun auch wieder ungleichen Eingangspotentiale an der Vergleicherschaltung 565 geht der Ausgang 575 und damit der Ausgang 60 auf logisch H, was zu einer Fehleranzeige auf der Kontrolleuchte 44 führt.

Sollte im umgekehrten Falle aufgrund einer Fehlfunktion in der Treiberschaltung 465 der Feldeffekttransistor 85 durchgeschaltet sein, obwohl die Signalspannung 305 auf logisch L liegt, so liefert die Meßschaltung 505 an ihrer Ausgangsleitung 515 ein logisch H-Signal und die Vergleicherschaltung 565 schaltet ihren Ausgang 575 auf logisch H. Auch dies führt zu einer Fehleranzeige.

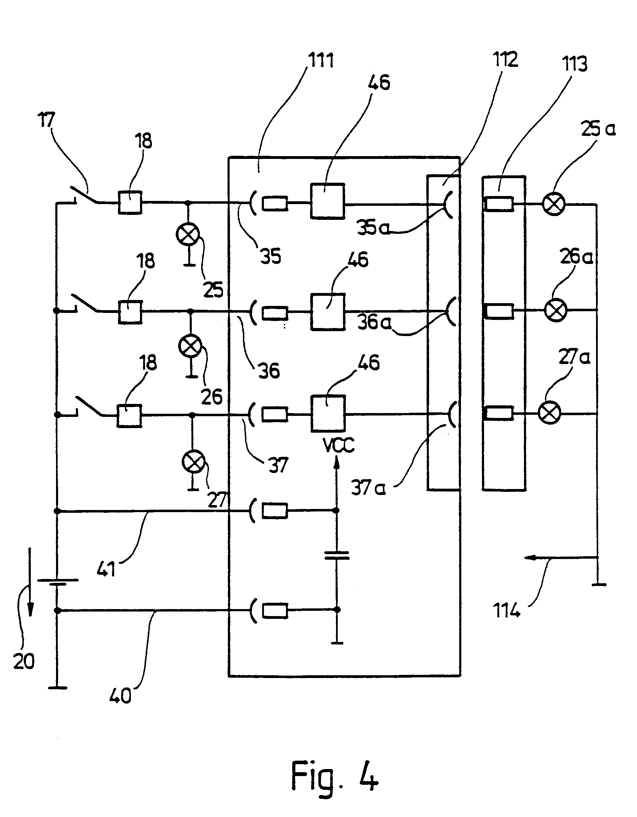

Ein weiteres Ausführungsbeispiel der neuen Schaltungsanordnung ist in Fig. 4 gezeigt und mit dem Bezugszeichen 111 versehen. In Fig. 4 sind die gleichen Bezugszeichen verwendet wie in Fig.1, sofern es sich um identische Gegenstände handelt.

In ungefähr 50 % der neuen Zugfahrzeuge werden nur die Lampen 16 von Bremslicht 25 sowie von rechtem und linkem Standlicht 27 und 26 durch eine Sicherungseinrichtung 18 gesichert, so daß in diesen Fällen die neue Schaltungsanordnung 111 verwendet werden kann, die deutlich kleiner und vor allem preiswerter ist, als die Schaltungsanordnung 11 aus Fig. 1.

In der Schaltungsanordnung 111 wurde auf die Kontrolleuchte 44 und die Überwachungsschaltung 45 verzichtet, da insbesondere die Blinklichter 23, 24 hier nicht zu den gesicherten Lampen 16 zählen. Alle nicht gesicherten Lampen 16 werden in bekannter Weise mit entsprechenden Lampen 16a des Hängers verbunden, bspw. über Stromrelais.

Bei dieser Ausführung weisen Steckdose 112 und Stecker 113 lediglich 3 Anschlüsse 35a, 36a und 37a auf, so auch sie kleiner und preiswerter auszuführen sind als die Steckdose 12 und der Stecker 13 nach Fig. 1. Die Masse wird hier nicht über Steckdose 112 und Stecker 113 übertragen, sondern über eine gesonderte Masseleitung 114, die zu dem Chassis des Zugfahrzeuges geführt ist. Dies ist selbstverständlich auch bei der Schaltungsanordnung nach Fig.1 so möglich.

Lediglich aus Gründen der Vollständigkeit sei erwähnt, daß auch beliebige Zwischenstufen zwischen den Schaltungsanordnungen 11 und 111 möglich sind. So kann bspw. die Schaltungsanordnung 111 um Treiberstufen 46 für die Blinklichter 23 und 24 sowie um die Überwachungseinrichtung 45 erweitert werden, so daß wie bei der Schaltungsanordnung 11 eine Kontrolleuchte 44 betrieben werden kann.

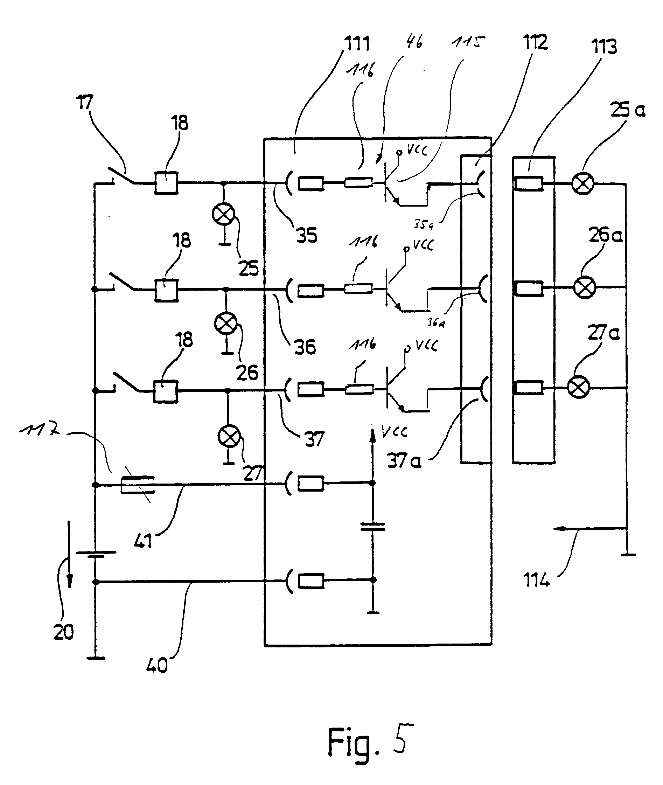

In Fig. 5 ist ein technisch vereinfachtes Ausführungsbeispiel der Schaltungsanordnung 111 aus Fig. 4 dargestellt. In der gezeigten Schaltungsanordnung umfaßt jede der drei Treiberschaltungen 46 einen am Ausgang kurzschlußfesten Transistor 115 mit einem Basislängswiderstand 116. Die Transistoren 115 sind mit ihrem Kollektor parallel geschaltet und auf die Betriebsspannung VCC gelegt, während ihre jeweiligen Emitter mit den Anschlüssen 35a, 36a, 37a der Steckdose 112 verbunden sind. Auf diese einfache und besonders preiswerte Weise können bereits viele im Zusammenhang mit den Fig. 1 bis 4 erzielten Vorteile erreicht werden.

In dem Ausführungsbeispiel nach Fig. 5 ist weiterhin eine Längssicherung 117 zu erkennen, über welche die Betriebsspannung gesichert ist, mit der die Schaltungsanordnung 111 und damit die Blinklichter 25a, 26a, 27a der Blinklichtanlage des Hängers versorgt werden. Die Sicherung 117 dient als Vorsicherung für das Kabel, das beim Einbau der Schaltungsanordnung 111 frei in dem PKW verlegt wird. Durch die Vorsicherung 117 ist sichergestellt, daß auch bei unsachgemäßer Behandlung z.B. bei einer Reparatur kein dauerhafter Ausfall der elektrischen Anlage zu befürchten ist. Die Sicherung 117, die beispielsweise eine 30A-Sicherung (träge) sein kann, dient also lediglich als Leitungssicherung, die Stromkreisabsicherung für die Blinklichter der Blinklichtanlage des Hängers erfolgt weiterhin über die an ihrem Ausgang kurzschlußfesten Transistoren 115.

Abschließend sei erwähnt, daß in den Schaltungsanordnungen 11 und 111 beliebige hochohmige und ausgangsseitig kurzschlußfeste Treiberschaltungen 46 eingesetzt werden können. Die in Fig. 3 näher gezeigte Treiberschaltung 465 ist lediglich als Beispiel zu verstehen. Bei einem Kurzschluß im Hänger kann es dabei je nach verwendeter Treiberschaltung 46 erforderlich sein, nach dem Abkoppeln des Hängers die entsprechenden Lampen 16 des Zugfahrzeuges kurzfristig auszuschalten, damit die jeweiligen im ausgangsseitigen Kurzschluß befindlichen Treiberschaltungen 46 wieder ihren Betriebszustand einnehmen. Dies kann insbesondere bei solchen Treiberschaltungen 46 der Fall sein, bei denen zum Erzielen der ausgangsseitigen Kurzschlußfestigkeit eine International Preliminary Examination Report Rückkopplung zwischen Eingang und Ausgang erforderlich ist.

## Patentansprüche

1. Schaltungsanordnung für ein Zugfahrzeug eines aus dem Zugfahrzeug und einem Hänger bestehenden Wagenzuges, wobei das Zugfahrzeug eine Betriebsspannung (20) zum Betreiben seiner Beleuchtungs- und Signaleinrichtung (10) sowie zumindest eine Steckdose (12) aufweist, an deren Anschlüssen (31a - 37a) von einzelnen Lampen (16) der Beleuchtungs- und Signalanlage (10) abgegriffene Signalspannungen (30) für entsprechende Lampen (16a) einer Beleuchtungs- und Signalanlage (14) des Hängers abnehmbar sind, wobei die jeweiligen Anschlüsse (31a - 37a) der Steckdose (12) über zugeordnete Treiberschaltungen (46) mit den jeweiligen Signalspannungen (30) beaufschlagt werden, wobei die Treiberschaltungen (46) die Signalspannungen (30) hochohmig von den einzelnen Lampen (16) des Zugfahrzeuges abgreifen und jede Treiberschaltung (46) einen zwischen die Betriebsspannung (20) und den zugeordneten Anschluß (31a und 37a) der Steckdose (12) geschalteten verlustleistungsarmen sowie ausgangsseitig kurzschlußfesten Transistor (115) aufweist, der eingangsseitig lediglich über Widerstandsstrecken (116) mit den entsprechenden Lampen (16; 25, 26, 27) verbunden ist.

2. Schaltungsanordnung nach Anspruch 1, dadurch gekennzeichnet, daß jede Treiberschaltung (46) eine hochohmige invertierende Eingangsstufe (80) aufweist, deren Ausgang mit der Ausgangsstufe (84) verbunden ist.

3. Schaltungsanordnung nach einem der vorhergehenden Ansprüche, dadurch gekennzeichnet, daß eine Überwachungsschaltung (45) vorgesehen ist, die ermittelt, in welchem Betriebszustand sich ausgewählte überwachte Lampen (16a) der Beleuchtungs- und Signalanlage (14) des Hängers befinden, und die den Betriebszustand auf einer Anzeigeeinheit anzeigt.

4. Schaltungsanordnung nach Anspruch 3, dadurch gekennzeichnet, daß die Überwachungsschaltung (45) für den Lampenstrom jeder überwachten Lampe (16a) des Hängers eine Meßschaltung (50) aufweist, die auf ihrer Ausgangsleitung (51) ein Ausgangssignal (52) erzeugt, das einen ersten logischen Zustand einnimmt, wenn ein Lampenstrom innerhalb eines vorgewählten Stromwertebereiches fließt, und das einen zweiten logischen Zustand einnimmt, wenn bei der überwachten Lampe (16a) Leerlauf oder Kurzschluß vorliegt.

5. Schaltungsanordnung nach Anspruch 4, dadurch gekennzeichnet, daß zu den überwachten Lampen (16a) des Hängers dessen linkes und rechtes Blinklicht (23a, 24a) zählen und daß die Ausgangsleitungen (51) der Meßschaltungen (50) beider Blinklichter (23a, 24a) miteinander über eine ODER-Schaltung (53) verknüpft sind, deren Ausgang (54) zu einer gemeinsamen Kontrolleuchte (44) für beide Blinklichter (23a, 24) führt.

6. Schaltungsanordnung nach Anspruch 4, dadurch gekennzeichnet, daß für einige der überwachten Lampen (16a) des Hängers jeweils eine Vergleicherschaltung (56) vorgesehen ist, die einen an der jeweiligen Treiberschaltung (46)abgegriffenen Sollwert mit dem Ausgangssignal (52) der zugeordneten Meßschaltung (50) vergleicht und deren Ausgang (57) zu der Anzeigeeinheit geführt ist.

7. Schaltungsanordnung nach Anspruch 6, dadurch gekennzeichnet, daß die Ausgänge (57) der Vergleicherschaltungen (56) für die überwachten Lampen (16a) von Bremslicht (25a) und linkem sowie rechtem Standlicht (26a, 27a) des Hängers über eine ODER-Schaltung (59) miteinander verknüpft sind, deren Ausgang (60) zu einer gemeinsamen Kontrolleuchte (44) in der Anzeigeeinheit führt.

8. Schaltungsanordnung nach Anspruch 7, dadurch gekennzeichnet, daß ein Taktgeber (63) für die Kontrolleuchte (44) vorgesehen ist, der in Abhängigkeit von dem Ausgang (60) der ODER-Schaltung (59) die Kontrolleuchte (44) rhythmisch blinken läßt.

9. Schaltungsanordnung nach den Ansprüchen 5 und 8, dadurch gekennzeichnet, daß eine gemeinsame Kontrolleuchte (44) für die Blinklichter (23a, 24a), die Standlichter (26a, 27a) und das Bremslicht (25a) vorgesehen ist, wobei die Taktfrequenz des Taktgebers (63) von der Blinkfrequenz der Blinklichter (23, 24) verschieden ist.

10. Schaltungsanordnung nach einem der Ansprüche 3 bis 9, dadurch gekennzeichnet, daß sie über zwei voneinander unabhängige und entkoppelte Versorgungsleitungen (41, 42) mit der Betriebsspannung (20) verbunden ist, daß die Ausgangsstufen (84) der Treiberschaltungen (46) mit der einen oder der anderen Versorgungsleitung (41, 42) verbunden sind, und daß die Spannungspegel beider Versorgungsleitungen (41, 42) von der Überwachungsschaltung (45) überwacht und im Fehlerfall auf einer Kontrolleuchte (44) angezeigt werden.

11. Schaltungsanordnung nach den Ansprüchen 9 und 10, dadurch gekennzeichnet, daß die gemeinsame Kontrolleuchte (44) auch für die Spannungspegel vorgesehen ist.

12. Schaltungsanordnung nach einem der Ansprüche 4 bis 11, dadurch gekennzeichnet, daß jede Meßschaltung (50) einen in Reihe mit der jeweiligen Treiberschaltung (46) und dem jeweiligen Anschluß (31a - 37a) der Steckdose (12) geschalteten niederohmigen Meßwiderstand (87) und eine Verstärkerschaltung aufweist, die aus dem Spannungsabfall (88) über dem Meßwiderstand (87) das Ausgangssignal (52) erzeugt.

13. Schaltungsanordnung nach Anspruch 12, dadurch gekennzeichnet, daß die Verstärkerschaltung die am Ausgang (49) der Treiberschaltung (46) anstehende Spannung auf ihre Ausgangsleitung (51) durchschaltet, wenn der Strom durch den Meßwiderstand (87) einen Schwellwert überschreitet.

14. Schaltungsanordnung nach Anspruch 13, dadurch gekennzeichnet, daß der Widerstandswert des Meßwiderstandes (87) in der Größenordnung des Ausgangsinnenwiderstandes der Treiberschaltung (46) liegt.

15. Schaltungsanordnung nach Anspruch 1 oder 2, dadurch gekennzeichnet, daß zumindest für einige der von einer Sicherungseinrichtung (18) des Zugfahrzeuges gesicherten Lampen (16) je eine Treiberschaltung (46) vorgesehen ist.

16. Schaltungsanordnung nach Anspruch 15, dadurch gekennzeichnet, daß zu den gesicherten Lampen (16) des Zugfahrzeuges dessen Bremslicht (25) sowie dessen rechtes und linkes Standlicht (27, 26) gehören.

## Claims

1. Circuit arrangement for a towing vehicle of a vehicle combination consisting of the towing vehicle and a trailer, in which the towing vehicle has an operating voltage (20) for operating its lighting and signal facility (10) and at least one socket outlet (12), at the terminal connections (31a - 37a) of which signal voltages (30) picked up from individual lamps (16) of the lighting and signal system (10) are tappable for corresponding lamps (16a) of a lighting and signal system (14) of the trailer, the respective terminal connections (31a - 37a) of the socket outlet (12) being acted upon via related driver circuits (46) with the respective signal voltages (30), the driver circuits (46) tapping the signal voltages (30) at high impedance from the individual lamps (16) of the towing vehicle and each driver circuit (46) having a low-power-loss transistor (115), which is short-circuit-proof on the output side, connected between the operating voltage (20) and the related terminal connection (31a and 37a) of the socket outlet (12), which transistor is connected on the input side to the corresponding lamps (16; 25, 26, 27) only via resistor links (116).

2. Circuit arrangement according to claim 1, characterized in that each driver circuit (46) has a high-impedance inverting input stage (80), the output of which is connected to the output stage (84).

3. Circuit arrangement according to one of the preceding claims, characterized in that a monitoring circuit (45) is provided, which ascertains the operating state in which selected monitored lamps (16a) of the lighting and signal system (14) of the trailer are to be found, and which indicates the operating state on a display unit.

4. Circuit arrangement according to claim 3, characterized in that the monitoring circuit (45) for the lamp current of each monitored lamp (16a) of the trailer has a measuring circuit (50), which produces on its output line (51) an output signal (52), which takes up a first logical state if a lamp current flows within a preselected current value range and which takes up a second logical state if no-load operation or a short circuit occurs in the monitored lamp (16a).

5. Circuit arrangement according to claim 4, characterized in that the monitored lamps (16a) of the trailer include its left and right indicator light (23a, 24a) and that the output lines (51) of the measuring circuits (50) of both indicator lights (23a, 24a) are connected to one another via an OR circuit (53), the output (54) of which leads to a common pilot light (44) for both indicator lights (23a, 24a).

6. Circuit arrangement according to claim 4, characterized in that provided for each of some of the monitored lamps (16a) of the trailer is a comparator circuit (56), which compares a desired value tapped at the respective driver circuit (46) with the output signal (52) of the related measuring circuit (50) and the output (57) of which is led to the display unit.

7. Circuit arrangement according to claim 6, characterized in that the outputs (57) of the comparator circuits (56) for the monitored lamps (16a) of the brake light (25a) and left and right parking light (26a, 27a) of the trailer are connected to one another via an OR circuit (59), the output (60) of which leads to a common pilot light (44) in the display unit.

8. Circuit arrangement according to claim 7, characterized in that provided for the pilot light (44) is a clock pulse generator (63), which depending on the output (60) of the OR circuit (59) makes the pilot light (44) flash rhythmically.

9. Circuit arrangement according to claims 5 and 8, characterized in that a common pilot light (44) is provided for the indicator lights (23a, 24a), the parking lights (26a, 27a) and the brake light (25a), the clock pulse frequency of the clock pulse generator (63) being different to the flashing frequency of the indicator lights (23, 24).

10. Circuit arrangement according to any one of claims 3 to 9, characterized in that it is connected to the operating voltage (20) via two supply lines (41, 42) independent of and isolated from one another, that the output stages (84) of the driver circuits (46) are connected to one or the other supply line (41, 42) and that the voltage levels of both supply lines (41, 42) are monitored by the monitoring circuit (45) and in the event of a fault are indicated on a pilot light (44).

11. Circuit arrangement according to claims 9 and 10, characterized in that the common pilot light (44) is also provided for the voltage levels.

12. Circuit arrangement according to any one of claims 4 to 11, characterized in that each measuring circuit (50) has a low-impedance measuring shunt (87) connected in series to the respective driver circuit (46) and the respective terminal connection (31a - 37a) of the socket outlet (12) and an amplifier circuit, which produces the output signal (52) from the voltage drop (88) across the measuring shunt (87).

13. Circuit arrangement according to claim 12, characterized in that the amplifier circuit switches the voltage present at the output (49) of the driver circuit (46) through to its output line (51) if the current through the measuring shunt (87) exceeds a threshold value.

14. Circuit arrangement according to claim 13, characterized in that the resistance value of the measuring shunt (87) is in the order of magnitude of the output internal resistance of the driver circuit (46).

15. Circuit arrangement according to claim 1 or 2, characterized in that a driver circuit (46) is provided for each of at least some of the lamps (16) fused by a fusing device (18) of the towing vehicle.

16. Circuit arrangement according to claim 15, characterized in that the fused lamps (16) of the towing vehicle include its brake light (25) and its right and left parking light (27, 26).

## Revendications

1. Montage électrique destiné à un véhicule tracteur d'un ensemble routier comprenant un véhicule tracteur et une remorque, le véhicule tracteur présentant une tension de service (20) destinée au fonctionnement de son dispositif d'éclairage et de signalisation (10) ainsi qu'au moins une prise (12) au niveau des branchements (31a - 37a) de laquelle des tensions de signal (30), prélevées sur différentes lampes (16) du dispositif d'éclairage et de signalisation (10), sont susceptibles d'être prélevées pour des lampes (16a) correspondantes d'un dispositif d'éclairage et de signalisation (14) de la remorque, chaque branchement (31a - 37a) de la prise (12) étant sollicité par les tensions de signal (30) associées, par l'intermédiaire de circuits d'attaque (46) correspondants, les circuits d'attaque (46) prélevant les tensions de signal (30), avec une valeur ohmique élevée, de chaque lampe (16) du véhicule tracteur, et chaque circuit d'attaque (46) présentant un transistor (115) à faibles pertes en puissance et résistant aux courts-circuits du côté de la sortie, monté entre la tension de service (20) et le branchement (31a et 37a) associé de la prise (12), qui, du côté de l'entrée, n'est relié aux lampes (16 ; 25, 26, 27) associées que par l'intermédiaire de branches de circuit à résistance (116).

2. Montage électrique selon la revendication 1, caractérisé en ce que chaque circuit d'attaque (46) présente un étage d'entrée (80) inverseur à valeur ohmique élevée, dont la sortie est reliée à l'étage de sortie (84).

3. Montage électrique selon l'une des revendications précédentes, caractérisé en ce qu'est prévu un circuit de surveillance (45) qui indique dans quel état de fonctionnement se trouvent des lampes (16a) surveillées sélectionnées du dispositif d'éclairage et de signalisation (14) de la remorque, et qui affiche l'état de fonctionnement sur une unité d'affichage.

4. Montage électrique selon la revendication 3, caractérisé en ce que le circuit de surveillance (45) présente un circuit de mesure (50) destiné au courant circulant dans chaque lampe (16a) surveillée de la remorque, circuit de mesure qui produit, sur sa ligne de sortie (51), un signal de sortie (52) qui se place dans un premier état logique lorsqu'un courant de lampe circule à l'intérieur d'une plage de valeurs de courant présélectionnée, et qui se place dans un deuxième état logique lorsque la lampe (16a) surveillée fonctionne à vide ou en cas de court-circuit.

5. Montage électrique selon la revendication 4, caractérisé en ce que, parmi les lampes (16a) surveillées de la remorque, figurent ses clignotants gauche et droit (23a, 24a), et en ce que les lignes de sortie (51) des circuits de mesure (50) des deux clignotants (23a, 24a) sont reliées entre elles au moyen d'un circuit OU (53), dont la sortie (54) conduit à un témoin de contrôle (44) destiné aux deux clignotants (23a, 24).

6. Montage électrique selon la revendication 4, caractérisé en ce qu'est prévu, pour certaines des lampes (16a) surveillées de la remorque, un comparateur (56), qui compare une valeur de consigne, prélevée sur chaque circuit d'attaque (46), avec le signal de sortie (52) du circuit de mesure (50) associé, et dont la sortie (57) est reliée à l'unité d'affichage.

7. Montage électrique selon la revendication 6, caractérisé en ce que les sorties (57) des comparateurs (56) destinés aux lampes (16a) surveillées du feu stop (25a) et des veilleuses gauche et droite (26a, 27a) de la remorque sont reliées les unes aux autres par l'intermédiaire d'un circuit OU (59), dont la sortie (60) conduit à un témoin de contrôle (44) commun dans l'unité d'affichage.

8. Montage électrique selon la revendication 7, caractérisé en ce qu'est prévu, pour le témoin de contrôle (44), un générateur d'impulsions (63) qui, en fonction de la sortie (60) du circuit OU (59), fait clignoter de façon rythmée le témoin de contrôle (44).

9. Montage électrique selon les revendications 5 et 8, caractérisé en ce qu'est prévu un témoin de contrôle (44) commun pour les clignotants (23a, 24a), les veilleuses (26a, 27a) et le feu stop (25a), la fréquence rythmique du générateur d'impulsions (63) étant différente de la fréquence de clignotement des clignotants (23, 24).

10. Montage électrique selon l'une des revendications 3 à 9, caractérisé en ce qu'il est relié à la tension de service (20) par l'intermédiaire de deux lignes d'alimentation (41, 42) indépendantes et découplées, en ce que les étages de sortie (84) des circuits d'attaque (46) sont reliés à l'une ou l'autre des lignes d'alimentation (41, 42), et en ce que le niveau de tension des deux lignes d'alimentation (41, 42) est surveillé par le circuit de surveillance (45) et est affiché, en cas de défaut, sur un témoin de contrôle (44).

11. Montage électrique selon les revendications 9 et 10, caractérisé en ce que le témoin de contrôle (44) commun est également prévu pour le niveau de tension.

12. Montage électrique selon l'une des revendications 4 à 11, caractérisé en ce que chaque circuit de mesure (50) présente une résistance de mesure (87) à faible valeur ohmique, montée en série avec chaque circuit d'attaque (46) et chaque branchement (31a - 37a) de la prise (12), et un circuit amplificateur qui, à partir de la chute de tension (88), produit le signal de sortie (52) par l'intermédiaire de la résistance de mesure (87).

13. Montage électrique selon la revendication 12, caractérisé en ce que le circuit amplificateur effectue une commutation de la tension qui règne à la sortie (49) du circuit d'attaque (46) sur sa ligne de sortie (51) lorsque le courant traversant la résistance de mesure (87) dépasse une valeur seuil.

14. Montage électrique selon la revendication 13, caractérisé en ce que la valeur de résistance de la résistance de mesure (87) est approximativement équivalente à la résistance interne de sortie du circuit d'attaque (46).

15. Montage électrique selon la revendication 1 ou 2, caractérisé en ce qu'un circuit d'attaque (46) est prévu au moins pour certaines des lampes (16) protégées par un dispositif de protection (18) du véhicule tracteur.

16. Montage électrique selon la revendication 15, caractérisé en ce que, parmi les lampes (16) protégées du véhicule tracteur, figurent son feu stop (25) ainsi que ses veilleuses droite et gauche (27, 26).
